(19) Europäisches Patentamt
European Patent Office
Office européen des brevets

(11) **EP 1 760 374 B1**

(12) **EUROPEAN PATENT SPECIFICATION**

(45) Date of publication and mention
of the grant of the patent:
**17.12.2008 Bulletin 2008/51**

(51) Int Cl.:
***F16K 1/36*** (2006.01)

(21) Application number: **06017082.6**

(22) Date of filing: **16.08.2006**

(54) **Low loss poppet valve for a cleaning device and a method of delivering a cleaning fluid therewith**

Verlustarmes Tellerventil für Reinigungsvorrichtung und Reinigungsflüssigkeit Abgabeverfahren

Soupape à faible perte pour dispositif de nettoyage et méthode de distribution de fluide

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.08.2005 US 216591**

(43) Date of publication of application:
**07.03.2007 Bulletin 2007/10**

(73) Proprietor: **Diamond Power International Inc.**
**Lancaster, OH 43130 (US)**

(72) Inventors:
• **Fortner, Steven R.**
**Lancaster**
**Ohio 43130 (US)**

• **Brown, Clinton A.**
**NW Baltimore**
**Ohio 43105 (US)**
• **Hipple, James H.**
**Lancaster**
**Ohio 43130 (US)**
• **Habib, Tony F.**
**Lancaster**
**Ohio 43130 (US)**

(74) Representative: **Parry, Simon James**
**Forrester & Boehmert**
**Pettenkoferstrasse 20-22**
**80336 München (DE)**

(56) References cited:
**EP-A1- 0 391 038**      **GB-A- 664 906**
**JP-A- 56 113 864**      **JP-A- 2002 022 052**

## Description

FIELD OF THE INVENTION

The invention relates generally to a sootblower for removing debris from an interior of a boiler. More specifically, the invention relates to a valve for controlling the flow of a cleaning fluid into sootblower. Such a valve has been disclosed for example in document EP 0 391 038.

BACKGROUND OF THE INVENTION

During the operation of large-scale combustion devices, such as boilers that burn fossil fuels and pulp mill organics, slag and ash encrustations develop on interior surfaces of the boiler. The presence of these deposits degrades the thermal efficiency of the boiler. Therefore, it is periodically necessary to remove such encrustations. Various systems are currently used to remove these encrustations.

One such type of system includes a device referred to as a sootblower. Sootblowers are used to project a stream of cleaning fluid, such as air, steam or water, into the interior volume of the boiler. In the case of retracting type sootblowers, a lance tube is periodically advanced into and withdrawn from the boiler and conducts the cleaning fluid to spray from one or more nozzles fastened to the lance tube. For example, the lance tube slidingly receives a fluid-supplying feed tube in a telescopic manner so that the combined feed/lance tube has an adjustable effective length. As the lance tube is advanced into and withdrawn from the boiler, it may rotate or oscillate in order to direct one or more jets of cleaning fluid at desired surfaces within the boiler. In the case of stationary sootblowers, the lance tube is always maintained within the boiler cavity and the lance tube has a fixed effective length. In other words, a stationary sootblower typically does not require a feed tube.

Sootblowers deliver the cleaning fluid, typically steam, into the boiler at a relatively high pressure to facilitate the removal of the encrustations. Sootblowers typically require the steam to be delivered to the lance tube at a pressure of at least 120 pounds per square inch. Additionally, sootblowers typically receive the supply of steam from an inlet line extending in a direction generally perpendicular to the lance tube. The inlet line typically extends generally vertically from the floor, and the sootblower lance tube and feed tube usually extends generally horizontally into the boiler. Therefore, such sootblower have plumbing components that fluidly couple the respective perpendicular components, such as a conduit or valve having a 90 degree bend. Therefore, in a traversing sootblower having a feed tube and a lance tube, the inlet tube and the feed tube are typically connected by a connector element having a 90 degree bend, commonly known as an elbow joint. Similarly, in a stationary sootblower that does not include a feed tube, the inlet tube and the lance tube are typically connected by an elbow joint.

The elbow joint typically includes a valve device that controls the flow of steam flowing into the lance tube. The valves currently used are generally of the poppet valve type, and in addition to turning the flow "on" or "off" they may be provided with a means of adjusting flow in the on positions by controlling the cross-sectional flow through the valve, such as disclosed in U.S. Provisional Patent Application entitled, "EXTERNALLY ADJUSTABLE PRESSURE CONTROL POPPET VALVE" filed on March 24, 2004 and assigned Serial Number 60/555,763, which is hereby incorporated by reference. The means of adjusting flow may be an on-off valve and/or a valve that includes intermediate positions to more precisely control fluid flow.

Currently known sootblowers typically have a feed tube with an outer diameter of approximately 6,985 cm (2.75 inches) and an inner diameter of approximately 6,0325 cm (2.375 inches). Additionally, currently known sootblowers typically have a lance tube with an outer diameter of approximately 9,625 cm (3.5 inches). Thus, currently existing poppet valves typically have an outlet with an inner diameter of 6,985 cm (2.75 inches) or 9,625 cm (3.5 inches) to mate with either the feed tube or the lance tube, depending on whether the sootblower includes a feed tube. Therefore, when installing a replacement poppet valve it is desirable for the replacement poppet valve to have an outlet equal to that of the poppet valve being replaced so as to minimize part costs and maintenance costs for replacing the currently-existing feed tube and/or lance tube.

During operation of the boiler, waste steam is often created as a byproduct. The excess steam is typically not capable of being used for boiler cleaning since it has a relatively low pressure, such as 689,655 kPa (100 pounds per square inch). A particular contributor to pressure loss through the sootblower steam supply system is the currently available poppet valves. Even in the fully opened condition, substantial pressure loss is encountered in flow through the valve. More specifically, the poppet valve head in currently-known valves is positioned along the flow path of the cleaning fluid, thereby causing turbulent flow around the valve head. Therefore, due to pressure flow losses existent in the systems, currently-known sootblower systems have difficulty utilizing waste steam without using a pressure boosting device.

Since high pressure steam is generally required for sootblowers, a fraction of the steam generated by the boiler is diverted for cleaning. This diversion represents an overall thermal efficiency loss for the boiler operation.

As evident from the foregoing, it is desirous to provide a cleaning device having minimal flow loss, a 90 degree bend in fluid flow, and a low loss control valve that permits a relatively low-pressure fluid, such as boiler waste process steam, to be utilized as cleaning fluid without the use of a pressure boosting device. It is also desirous to provide a cleaning device control valve that is able to be interchanged with a currently-used control valve without replacing the lance tube or the feed tube.

SUMMARY OF THE INVENTION

In one aspect of the present invention, a poppet valve assembly is described for use with a sootblower for removing debris from an interior volume of a boiler. The poppet valve assembly includes a valve housing and a valve head configured to move within the valve housing between an open position and a closed position. The poppet valve assembly enables the cleaning fluid to undergo relatively small pressure loss as it flows through the poppet valve assembly when the valve head is in the open position. More specifically, the poppet valve assembly has a loss factor substantially less than currently-known valves (which have a loss factor of 6.0) when the valve head is in the open position. Preferably, the valve has a loss factor less than half of that currently known in the art. For example, the loss factor is preferably between 0.5 and 0.25 when the valve is in the open position.

In another aspect of the present invention, the valve housing includes first and second passages that extend along first and second directions that are substantially not parallel with each other. Furthermore, the valve head includes a connecting surface extending between the first and second passages when the valve head is in the open position. The connecting surface has a radius of curvature that is generally equal to the diameter of each of the first and second passages.

In another aspect of the present invention, a method of delivering a cleaning fluid into the interior volume of a boiler is described, including the steps of inserting a lance tube into the interior volume to deliver the cleaning fluid, providing a valve in fluid communication with the lance tube, and delivering the cleaning fluid to the valve.

Further objects, features and advantages of this invention will become readily apparent to persons skilled in the art after a review of the following description, with reference to the drawings and claims that are appended to and form a part of this specification.

BRIEF DESCRIPTION OF THE DRAWINGS

Figure 1 shows a long, retracting type sootblower having a retractable lance tube and a poppet valve controlling a flow of cleaning fluid thereto, where the sootblower embodies the principles of the present invention;

Figure 2 is a cross-sectional view of a feed tube of the sootblower taken along line 2-2 in Figure 1, showing a front, elevation view of the poppet valve;

Figure 3 is a cross-sectional view taken along line 3-3 in Figure 2, where the valve head is in the closed position;

Figure 4 is a cross-sectional view similar to that in Figure 3, where the valve head is in the open position;

Figure 5 is a cross-sectional view taken along line 5-5 in Figure 2, showing a bypass conduit extending through the valve housing;

Figures 6a is a cross-sectional view of an alternative embodiment of a poppet valve embodying principles of the present invention, where a linkage arm is in a first position;

Figure 6b is a side view of the poppet valve shown in Figure 6a;

Figure 7a is a cross-sectional view of the poppet valve shown in Figure 6a, where the linkage arm is in a second position;

Figure 7b is a side view of the poppet valve shown in Figure 7a;

Figure 8a is a cross-sectional view of the poppet valve shown in Figure 6a, where the linkage arm is in a third position; and

Figure 8b is a side view of the poppet valve shown in Figure 8a.

DETAILED DESCRIPTION OF THE INVENTION

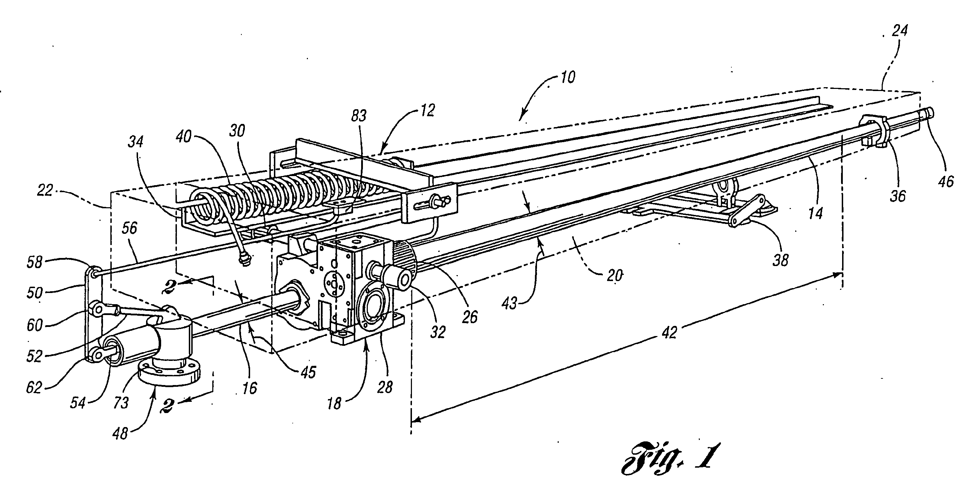

Referring now to the drawings, Figure 1 shows a sootblower 10 embodying principles of the present invention. The sootblower 10 principally includes a frame assembly 12 (indicated by phantom lines), a lance tube 14, a feed tube 16, and a carriage 18. The sootblower 10 is shown in its normal at rest position in Figure 1, but upon actuation the lance tube 14 is extended into and retracted from a boiler (not shown) while being simultaneously rotated.

The frame assembly 12 shown in the Figures includes a generally rectangular-shaped frame box 20 which forms a housing for the entire unit. The carriage 18 is guided along tracks (not shown) located on opposite sides of frame box 20 to enable longitudinal movement of carriage 18. The frame assembly 12 is supported at a proximal end 22 and at a distal end 24 that is adjacent to and/or connected to the boiler. The carriage 18 drives lance tube 14 into and out of the boiler via a drive motor 26 and a gear box 28. More specifically, the carriage 18 drives a pair of pinion gears 30 and 32 that engage rack assemblies 34, to advance the carriage 18 and the lance tube 14. A pair of bearings (not shown) engage the tracks to support the carriage 18.

A front support bracket 36 includes canted rollers which support lance tube 14 during its longitudinal and rotational motion. Additionally, an intermediate support bracket 38 is provided to prevent excessive deflection of the lance tube 14. A coiled electrical cable 40 supplies power to the drive motor 26 as the carriage 18 and the drive motor 26 move along the feed tube 16.

The lance tube 14 slidably receives the feed tube 16 in a telescoping manner to form an adjustable-length component having an overlapping portion 42 between the lance tube 14 and the feed tube 16. Therefore, the lance tube 14 preferably has an outer diameter 43 that is larger than the feed tube outer diameter 45. During traversal of the sootblower 10, the position of the feed tube 16 remains generally unchanged as the lance tube 14 is advanced and retracted, causing that the length of the overlapping portion 42 to be varied. In a preferred exemplary design, the lance tube outer diameter 43 is equal to 9,625 cm (3.5 inches) and the feed tube diameter 45 is equal to 6,985 cm (2.75 inches). The feed tube 16 preferably has a wall thickness of 0,47625 cm (0.1875 inches) and therefore the feed tube 16 inner diameter is preferably equal to 6,0325 cm (2.375 inches). In an alternative preferred exemplary design, the lance tube outer diameter is equal to 10,16 cm (4.0 inches) and the feed tube diameter is equal to 8,255 cm (3.25 inches). However, the components may have any other suitable dimensions.

During operation of the sootblower 10, the cleaning fluid flows along the length of the feed tube 16, into the lance tube 14, and through a sootblower nozzle 46. Multiple nozzles 46 may be provided, each having throats that are appropriately shaped and sized to control the velocity and the spray pattern of cleaning streams flowing therefrom.

The volume of the cleaning fluid flowing into the feed tube 16 is controlled by a poppet valve assembly 48 that controls the flow of the cleaning fluid. The poppet valve assembly 48 is actuated through linkages, such as first, second and third linkages 50, 52, 54 shown in Figure 1. The first, second and third linkages 50, 52, 54 are engaged by the movement of the carriage 18 via a carriage rod 56, thereby permitting the cleaning fluid to flow into the feed tube 16 as the carriage 18 moves. The carriage 18 is connected to the carriage rod 56 such that the respective components 18, 56 move in unison with each other. The carriage rod 56 is also pivotably connected to a top portion 58 of the first linkage 50 such that the top portion 58 also moves in unison with the carriage 18. A middle portion 60 of the first linkage 50 is pivotably connected to the second linkage 52 such that the first linkage 50 pivots about the middle portion 60 as the carriage 18 moves. The pivoting movement of the first linkage 50 causes a bottom portion 62 of the first linkage 50 to move in a direction opposite that of the top portion 58. The bottom portion 62 of the first linkage 50 is connected to the third linkage 54, thereby moving the third linkage 54 in a direction opposite that of the carriage 18. The second linkage 52 shown in Figures 1-4 is fixedly connected to a portion of the poppet valve assembly 48 by any suitable means, such as a fastener or a welding joint. Alternatively, the second linkage 52 is an integral portion of the poppet valve assembly 48.

The movement of the third linkage 54 transversely actuates a portion of the poppet valve assembly 48, as will be discussed in further detail below. The force of the third linkage 54 onto the poppet valve assembly 48 may be varied based on the ratio of the distance between the top portion 58 and the middle portion 60 and the distance between the middle portion 60 and the bottom portion 62.

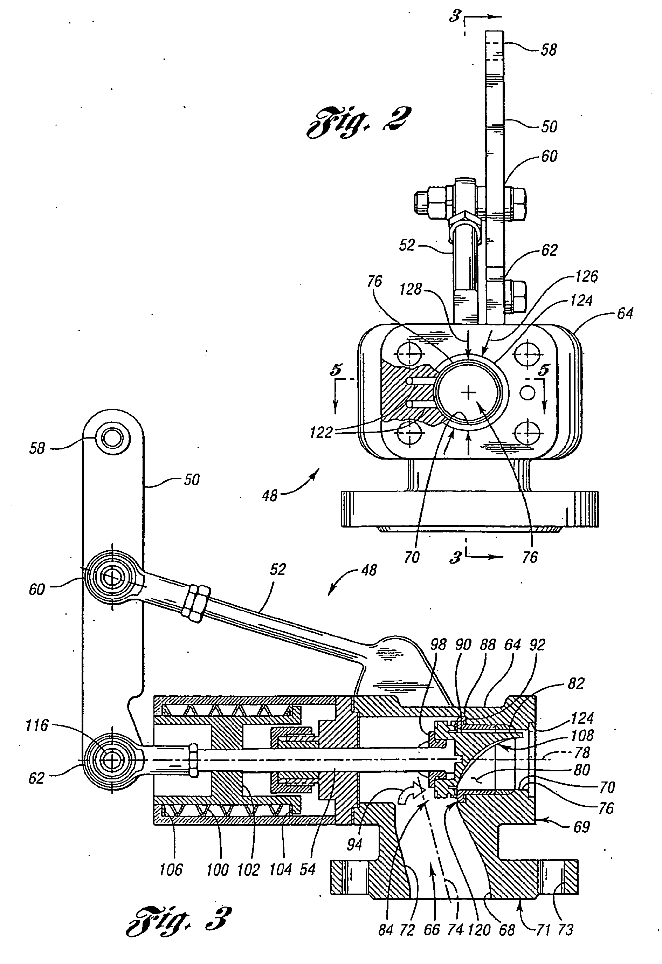

Referring now to Figures 2 through 4, the poppet valve assembly 48 will now be discussed in further detail. The poppet valve assembly 48 includes a poppet valve housing 64 defining a passageway 66 therethrough that fluidly connects a supply line (not shown) to the feed tube 16. More specifically, the supply line, which may be any suitable fluid-carrying conduit, is connected to an inlet 68 formed in a bottom face 69 of the poppet valve housing 64 to supply the cleaning fluid to the poppet valve assembly 48. Additionally, an opening 70 is also formed in a side face 69 of the poppet valve housing 64 to supply the cleaning fluid to the feed tube 16. The bottom face 71 is preferably secured to the supply line via a plurality of fasteners (not shown) that extend through openings 73 in the poppet valve housing 64, or by any other suitable method. Additionally, the side face 69 is secured to the feed tube 16 by a clamping plate connection, or by any other appropriate method. The respective faces 69 and 71 are preferably generally perpendicular to each other in order to correspond with the orientation of currently-existing components, the supply line and the feed tube 16.

The poppet valve housing 64 further defines a first passage 72 extending from the inlet 68 along a first axis 74 that is shown as being generally vertical in Figure 3. Additionally, the poppet valve housing 64 also defines a second passage 76 extending from the opening 70 along a second axis 78 that is shown as being substantially horizontal in Figure 3. The two passages 72 and 76 converge at an intersection point 80 that is selectively sealed by a translating poppet valve head 82.

The poppet valve head 82 has a generally round circumference to be able to selectively form a substantially fluid-tight seal with the poppet valve housing 64 to selectively separate the first and second passages 72, 76 from each other and to selectively prevent the cleaning fluid from flowing therethrough. The poppet valve head 82 is connected to the third linkage 54 and is able to slide transversely along the second axis 78. Therefore, as the carriage 18 is actuated and the linkages are thereby caused to move, the third linkage 54 causes the poppet valve head 82 to move transversely in a direction opposite to that of the carriage 18. In the figures, the poppet valve head 82 moves along a generally linear path, but may travel along any suitable path with the present invention.

The sootblower 10 may include one or more device, herein referred to as a stopper 83, to temporarily disengage and engage the connection between the carriage and the poppet valve head 82. More specifically, the stopper 83 is engaged with the carriage rod 56 when the carriage 18 is positioned near the poppet valve assembly 48 to open and close the poppet valve head 82. However, once the carriage 18 moves distally a predetermined distance, the stopper 83 becomes disengaged from the carriage rod 56 to temporarily disengage the connection between the respective components 82, 83. For example, when the carriage 18 moves distally from the natural resting position shown in Figure 1, the poppet valve head 82 is actuated along with the carriage 18. However, once the carriage 18 moves to the predetermined point along the feed tube 16, the stopper 83 becomes disengaged from the carriage rod 56 via a release mechanism. Then, upon return of the carriage 18 to the natural resting position, the stopper 83 again becomes engaged with the carriage rod 56 and causes the poppet valve head 82 to close.

The poppet valve head 82 is shown in a closed position 84 in Figure 3, where the cross-sectional area of the second passage 76 is substantially obstructed and the cleaning fluid is prevented from flowing therethrough. The poppet valve head 82 is in the closed position 84 when the carriage 18 is in the natural resting position shown in Figure 1, so that the cleaning fluid is not ejected from the nozzle 46 when the lance tube 14 has not been extended into the boiler.

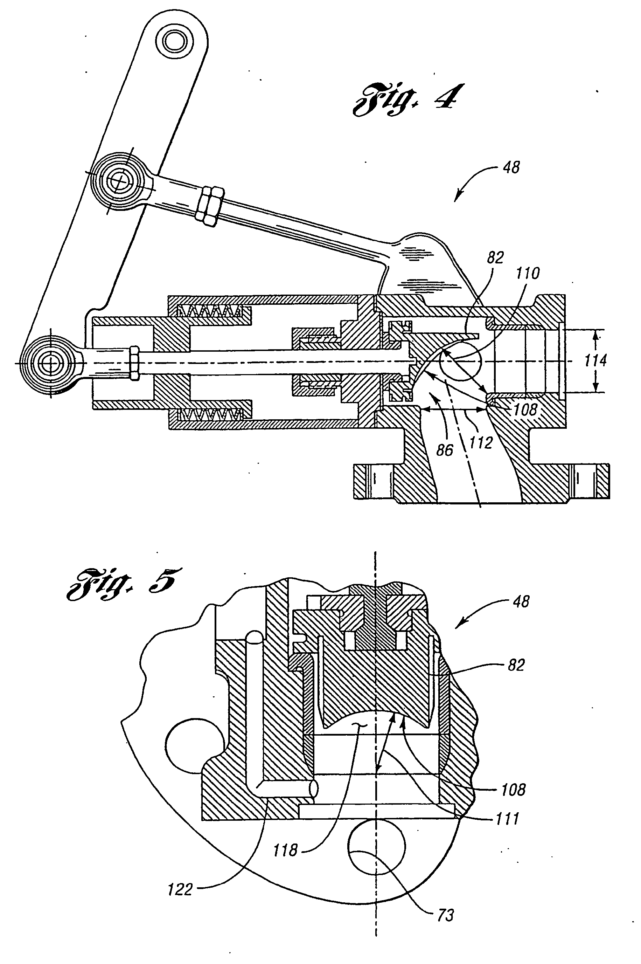

Additionally, the poppet valve head 82 is movable to an open position 86, shown in Figure 4, where the cross-sectional area of the second passage 76 is substantially unobstructed and the cleaning fluid is permitted to flow therethrough. The poppet valve head 82 is in the open position 86 when the carriage 18 and the lance tube 14 have extended forward from the position shown in Figure 1. Therefore, the cleaning fluid is ejected from the nozzle 46 when the lance tube 14 is extended into the boiler.

The poppet valve head 82 and the poppet valve housing 64 each preferably include components that provide a fluid-tight seal. For example, a sealing ring 88 is embedded in the poppet valve housing 64 and the poppet valve head 82 includes a satellite face 90 that is aligned with the sealing ring 88. The sealing ring 88 shown in the Figures extends around a rim 92 of the poppet valve housing 64 to substantially prevent the sealing ring 88 from being forced off of the poppet valve housing 64. The satellite face 90 cantilevers from the body of the poppet valve head 82 so as to be flexible, thereby improving the seal between the respective components 88, 90. The sealing ring 88 and the washer 90 are preferably both composed of stainless steel and/or a hardfacing material.

To further promote the seal between the poppet valve head 82 and the poppet valve housing 64, the poppet valve head 82 closes in the direction of the fluid flow, generally indicated by reference numeral 94. This configuration causes the cleaning fluid to force the poppet valve head 82 towards the closed position 84 during certain poppet valve head 82 positions. For example, the cleaning fluid may cause such a force if the poppet valve head 82 is in a position such that cleaning fluid is able to flow behind a back surface 98 of the poppet valve head 82.

Yet another mechanism to promote the seal between the poppet valve head 82 and the poppet valve housing 64 is a spring mechanism, such as a plurality of Belleville washers or a multi-turn wavespring 100 urging the poppet valve head 82 towards the closed position 84. Alternatively, any suitable urging mechanism, such as other types of springs, may be used. A sleeve 102 encircles and is coupled with the third linkage 54 such that the components 54 and 102 move in unison. The sleeve 102 includes a flange 104 engaging a first end of the Belleville washers 100 and the poppet valve housing 64 includes a flange 106 engaging the other end of the Belleville washers 100 to urge the sleeve 102 away from the poppet valve housing 64.

As shown in the Figures, the poppet valve head 82 includes a generally arcuate surface 108 to minimize pressure flow loss as the cleaning fluid flows through the passageway 66. Preferably, the arcuate surface 108 is generally arcuate along a first plane extending along the cross-section in Figures 3 and 4. For example, the arcuate surface 108 defines a first radius of curvature 110 along the first plane, as shown in Figure 4. Additionally, the arcuate surface 108 is also preferably generally arcuate along a second plane extending along the cross-section in Figure 5. For example, the arcuate surface 108 defines a second radius of curvature 111 along the second plane, as shown in Figure 5. The curvatures along the respective planes minimizing flow loss by providing a smooth contact surface (the arcuate surface 108) for the cleaning fluid along three dimensions.

The first radius of curvature 110 is preferably generally equal to a diameter 112 of the first passage 72 and a diameter 114 of the second passage 76. In this configuration, the cleaning fluid flow is not substantially constricted while flowing along the passageway 66 and the flow path of the cleaning fluid is generally smooth. When poppet valve assembly 48 is in the open position, an unobstructed flow path for cleaning fluid flow is provided. This is distinguishable from prior art poppet valves in which a valve head remains in the flow position.

As discussed above, the feed tube 16, which preferably has an outer diameter 45 of 6,985 cm (2.75 inches), is fluidly connected to the poppet valve assembly 48. More specifically, the poppet valve housing 64 defines an enlarged diameter portion 124 at the end of the second passage 76 that receives and forms a fluid-tight seal with the feed tube 16. Therefore, the enlarged diameter portion 124 preferably has an inner diameter 126 (Figure 2) of approximately 6,985 cm (2.75 inches). Furthermore, to avoid flow losses, the second passage 76 preferably has an inner diameter 128 generally equal to the inner diameter of the feed tube 16. Therefore, because the feed tube has a wall thickness equal to 0,47625 cm (0.1875 inches), the second passage 76 inner diameter 128 shown in the figures is generally equal to 6,0325 cm (2.375 inches), which is calculated from the following formula:

$$\left(OuterDiameter - (2 * WallThickness)\right) = 2.75'' - \left(2 * 0.1875''\right) = 2.75 - 0.375 = 2.375$$

The poppet valve head 82 includes an anti-rotation mechanism to prevent the arcuate surface 108 from becoming misaligned with the direction of the fluid flow 94. The anti-rotation mechanism is shown as an elbow joint 116 between the first linkage 50 and the third linkage 54 to prevent rotation therebetween. Furthermore, the poppet valve head 82 is connected to the third linkage 54 such as to prevent rotation therebetween. Alternatively, the anti-rotation mechanism may directly prevent rotation between the poppet valve housing 64 and the poppet valve head 82, such as by a slot-and-tab connection (not shown) between the respective components 64 and 82.

The arcuate surface 108 shown in the Figures minimizes pressure flow loss across the poppet valve head 82, thereby minimizing the cleaning fluid input pressure required (the pressure of the cleaning fluid entering the poppet valve assembly 48) necessary to provide a sufficiently high output pressure (the pressure of the cleaning fluid supplied to the feed tube 16 from the poppet valve assembly 48) need to produce a desired cleaning effect. As a quantitative example of the pressure flow loss through the poppet valve assembly 48, when the cleaning fluid has a Reynolds number that is typical for sootblowers such as 1.5 million or higher, the assembly is able to provide an output pressure of approximately 827,586 kPa (120 pounds per square inch) by inputting a stream of cleaning fluid to the inlet 68 at an input pressure of approximately (1034,482-965,517) kPa (150 - 140 pounds per square inch). In this example, the change in pressure across the poppet valve head 82 is calculated by the following formula:

$$\Delta P = K \frac{\rho \cdot V^2}{2g \cdot c}$$

$\Delta P$ is the change in pressure between first and second points,
$K$ is a system constant corresponding to the system loss factor,
$\rho$ is the density of the cleaning fluid,
$g$ is a constant corresponding to the acceleration of gravity,
$c$ is a height change of the cleaning fluid as it flows between the first
and second points, and
$V$ is the velocity of the cleaning fluid.

As can be seen by the above formula, the pressure change across the poppet valve head 82 and the loss factor K are directly proportional with each other. Therefore, it is desirable to minimize the loss factor K for the system to minimize the pressure loss caused by the poppet valve 48. The design shown in the Figures has a loss factor (K) that is generally between 1.75 and 1.25. Currently-used systems typically have a loss factor of 6.0 or higher. Therefore, the design shown in the Figures offers a significant advantage to currently-used systems.

The poppet valve housing 64 defines a plurality of bypass conduits 122 to deliver a low-pressure stream of secondary cleaning fluid to the boiler interior volume when the poppet valve head 82 is in the closed position 84. More specifically, the bypass conduits 122 in the Figures each extend from the ambient air to the passageway 66 downstream of the poppet valve head 82, thereby fluidly connecting the ambient air and the boiler internal volume regardless of the position of the poppet valve head 82. The above configuration permits the secondary cleaning fluid, for example air, water, or steam, to flow into the feed tube 16 and through the nozzle 46 to prevent debris from collecting around the nozzle 46.

When the poppet valve head 82 is in the open position 86, the highpressure cleaning fluid flushes debris from the nozzle 46, thus rendering the secondary cleaning fluid temporarily unnecessary. Therefore, the poppet valve housing 64 may include a secondary valve mechanism (not shown) that prevents the flow of the secondary cleaning fluid when undesirable, such as when the poppet valve head 82 is in the open position 86. Furthermore, the secondary valve mechanism may also include a one-way valve mechanism to prevent the highpressure cleaning fluid from exiting the sootblower 10 via the bypass conduit 122.

Some boilers operate at a partial vacuum, such that the pressure in the interior volume of the boiler is less than the ambient pressure. Therefore, for such boiler air is naturally drawn into the boiler interior volume through the bypass conduit 122. Alternatively, a positive displacement pump device may be used to deliver the secondary cleaning fluid into the boiler internal volume.

The bypass conduit 122 may also be used to provide a pressure increase to the cleaning fluid in the feed tube 16. For example, a fluid displacing device, such as a pump, may be in connection with the bypass conduit 122 to increase the cleaning fluid pressure when the poppet valve head 82 is in the open position 86. Alternatively, the fluid displacing device may be positioned in a location other than adjacent to the bypass conduit 122.

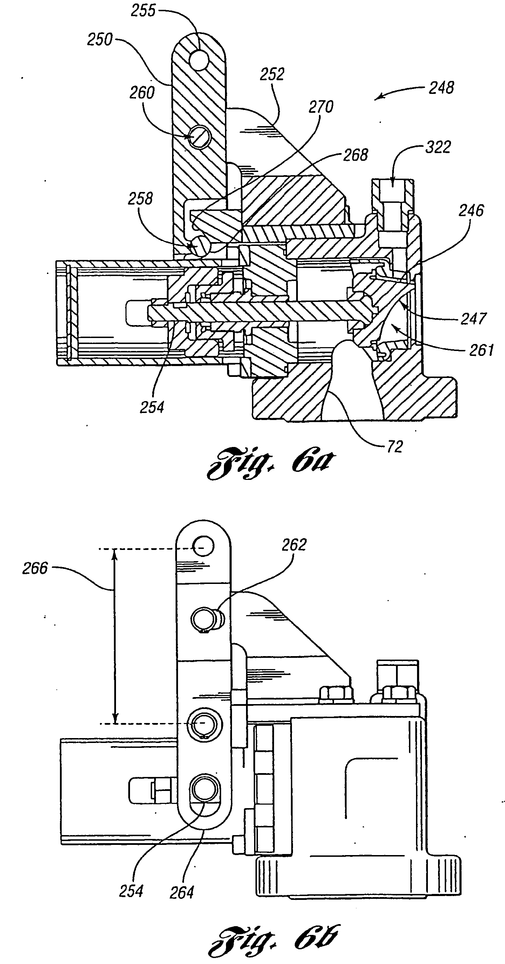

Referring now to Figures 6a - 8b, an alternative poppet valve assembly 248 is shown, having a poppet valve head 246 with a generally arcuate valve head surface 247. The valve head surface 247 is generally arcuate along a single plane, such that the arcuate nature of the surface is two dimensional, rather than the three dimensional arcuate nature of the poppet valve head shown in Figures 2-5. In yet another alternative design, the poppet valve head is generally spherical shaped. In this design, the spherical component may be rotationally moved or transversely moved between an open position and a closed position.

The poppet valve assembly 248 shown in Figures 6a-8b also includes an alternative linkage assembly, including a first, second and third linkages 250, 252, 254. The first, second and third linkages 250, 252, 254 are engaged by the movement of the carriage 18 via the carriage rod 56, thereby permitting the cleaning fluid to flow into the feed tube 16 as the carriage 18 moves. More specifically, the carriage 18 is attached to an upper portion 255 of the first linkage 250 to convert the translational movement of the carriage 18 into rotational movement of the first linkage 250.

The first linkage 250 includes a first pivot point 258, for applying a relatively high torque on the third linkage 254, and a second pivot point 260 for applying a lower torque on the third linkage 254. More specifically, when the poppet valve head 246 is in the closed position 261, and the fluid pressure is urging the poppet valve head 246 to remain in the closed position 247, then the first linkage 250 pivots about the first pivot point 258 and slides within a slot 262 formed in the second linkage 252. This movement causes the lower portion 264 and the third linkage 254 to move in the opposite direction of the carriage 18; thereby opening the poppet valve head 246. When the first linkage 250 is pivoting about the first pivot point 258 a relatively large first moment arm 266 acts on the carriage 18, thereby lowering the required force to initially open the poppet valve head 246. The first pivot point 258 in the figures is defined by a generally cylindrical pin 268 and a generally arcuate receiving surface 270 configured to permit rotation of the pin 268.

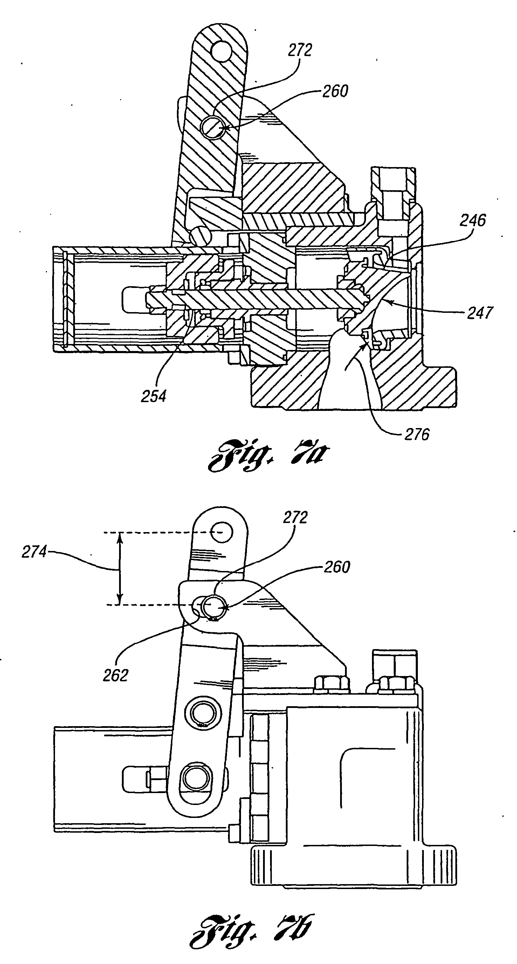

As shown in Figures 7a and 7b, as the poppet valve head 246 is partially opened, the first linkage 250 slides to the far right portion of the slot 262 formed in the second linkage 252, thereby causing the first linkage 250 to pivot about the second pivot point 260. The second pivot point 260 is defined by a pin 272 and the slot 262 that receives the pin 272 and permits rotation thereof. Rotation about the second pivot point 260 creates a relatively small second moment arm 274 acting on the carriage 18. However, the force required to further open the poppet valve head 246 is not necessarily increased due to the shortened moment arm because the fluid flow 276 is now able to flow through a gap between the poppet valve head 246 and the poppet valve housing, thereby urging the poppet valve head 246 towards an open position.

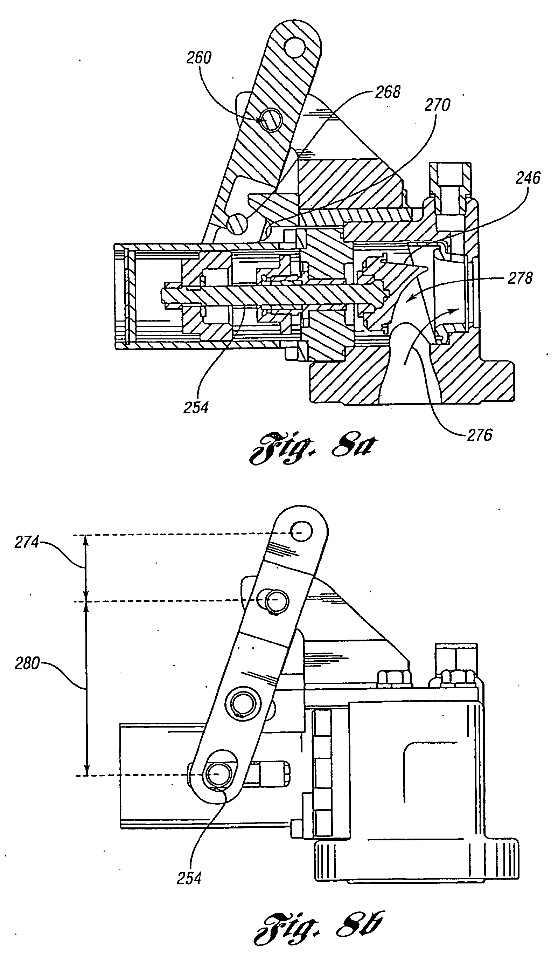

Next, as shown in Figures 8a and 8b, the first linkage 250 continues to rotate about the second pivot point 260 and the poppet valve head 246 is moved to an open position 278. While this occurs, the pin 268 slides away from the arcuate receiving surface 270. The relatively small second moment arm 274 acting on the carriage 18 is complimented by a relatively large moment arm 280 acting on the third linkage 254; thereby causing relatively rapid movement of the poppet valve head 246 into the open position 278.

The poppet valve assembly 248 includes a bypass conduit 322 to deliver a low-pressure stream of secondary cleaning fluid to the boiler interior volume when the poppet valve assembly is closed. More specifically, the bypass conduit 322 in Figures 6a-8b extends from the ambient air into the poppet valve assembly 248, thereby fluidly connecting the ambient air and the boiler internal volume regardless of the position of the poppet valve head. The above configuration permits the secondary cleaning fluid, for example air, water, or steam, to flow into the feed tube 16 and through the nozzle 46 to prevent debris from collecting around the nozzle 46. The bypass conduit 122 may also extend through the poppet valve housing at an angle to the vertical direction.

It is therefore intended that the foregoing detailed description be regarded as illustrative rather than limiting, and that it be understood that it is the following claims, including all equivalents, that are intended to define the scope of this invention.

**Claims**

1.    A poppet valve assembly (48) for use in a sootblower (10) configured to remove debris from an interior volume of a boiler, the poppet valve assembly (48) comprising:

a valve housing (64) defining a first passage (72) extending along a first axis (74) and a second passage (76) extending along a second axis (78) that is generally perpendicular to the first axis (74); and
a valve head (82) configured to move generally transversely with respect to the valve housing (64) between an open position and a closed position, the valve head (82) defining a generally arcuate connecting surface (108) extending between the first and second passages (72,76), such that the valve has a loss factor substantially less than 6.0 when the valve is in the open position.

2. A poppet valve assembly (48) according to claim 1, the loss factor being less than or equal to 3.0 when the valve head (82) is in the open position.

3. A poppet valve assembly (48) according to claim 2, the loss factor being less than or equal to 1.5 when the valve head (82) is in the open position.

4. A poppet valve assembly (48) according to claim 3, the loss factor being less than or equal to 0.5 when the valve head (82) is in the open position.

5. A poppet valve assembly (48) according to any of claims 1 to 4, the first and second passages (72,76) being substantially unobstructed when the valve head (82) is in the open position.

6. A poppet valve assembly (48) according to any preceding claim, wherein the generally arcuate connecting surface (108) has a substantially constant radius of curvature along a first plane.

7. A poppet valve assembly (48) according to any preceding claim, further comprising a linkage configured to move the valve head (82) within the valve housing (64) between the open and closed positions.

8. A poppet valve assembly (48) as in claim 7, wherein the linkage assembly pivots about a first axis to move the valve head (82) within the valve housing.

9. A poppet valve assembly (48) as in claim 8, wherein the linkage assembly pivots about the first axis during a first range of movement of the valve head (82) and pivots about the second axis during a second range of movement of the valve head (82).

10. A poppet valve assembly (48) according to any preceding claim, wherein a portion of the valve housing (64) along the second passage (76) has an inner diameter (126) generally equal to 6,985 cm (2.75 inches).

11. A method of delivering a cleaning fluid into an interior volume of a boiler, comprising the steps:

inserting a lance tube (14) into the interior volume to deliver the cleaning fluid into the interior volume of the boiler; providing a valve in fluid communication with the lance tube (14) to deliver the cleaning fluid thereto having a Reynolds number greater than 1.5 million; and delivering the cleaning fluid to the valve at a first pressure less than or equal to 1379,31 kPa (200 pounds per square inch) such that the cleaning fluid exits the valve at a second pressure greater than or equal to 689,655 kPa (100 pounds per square inch).

12. A method of delivering the cleaning fluid according to claim 11, wherein the first pressure is less than or equal to 1103,448 kPa (160 pounds per square inch) and the second pressure is greater than or equal to 827,586 kPa (120 pounds per square inch).

13. A method of delivering the cleaning fluid according to claim 11 or 12, wherein the cleaning fluid enters the valve flowing along a first axis and exits the valve flowing along an axis that is substantially perpendicular to the first axis.

14. A poppet valve assembly according to claim 6, wherein the first and second axes (74,78) lie in the first plane.

15. A poppet valve assembly as in claim 6, wherein the radius of curvature is generally equal to the diameter of the first passage (72).

16. A poppet valve assembly as in claim 6, the connecting surface having a generally arcuate surface defined by a substantially constant radius of curvature along a second plane orthogonal to the first plane.

17. A poppet valve assembly as in claim 15, wherein the valve head (82) is generally spherically shaped.

**Patentansprüche**

1.  Tellerventil-Einheit (48) zur Verwendung in einem Rußbläser (10), der zum Entfernen von Ablagerungen aus dem Innenvolumen eines Kessels eingerichtet ist, wobei die Tellerventil-Einheit (48) umfasst:

    ein Ventilgehäuse (64), das einen sich entlang einer ersten Achse (74) erstreckenden ersten Kanal (72) und einen sich entlang einer zweiten Achse (78) erstreckenden zweiten Kanal (76) definiert, wobei die zweite Achse (78) im Allgemeinen senkrecht zu der ersten Achse (74) ist; und
    einen Ventilkopf (82), der dazu eingerichtet ist, sich im Allgemeinen transversal bezüglich des Ventilgehäuses (64) zwischen einer geöffneten Stellung und einer geschlossenen Stellung zu bewegen, wobei der Ventilkopf (82) eine im Allgemeinen bogenförmige Verbindungsoberfläche (108) definiert, die sich zwischen dem ersten und dem zweiten Kanal (72, 76) erstreckt, so dass das Ventil einen Verlustfaktor wesentlich unterhalb von 6,0 aufweist, wenn sich das Ventil in der geöffneten Stellung befindet.

2.  Tellerventil-Einheit (48) nach Anspruch 1, wobei der Verlustfaktor nicht größer als 3,0 ist, wenn sich der Ventilkopf (82) in der geöffneten Stellung befindet.

3.  Tellerventil-Einheit (48) nach Anspruch 2, wobei der Verlustfaktor nicht größer als 1,5 ist, wenn sich der Ventilkopf (82) in der geöffneten Stellung befindet.

4.  Tellerventil-Einheit (48) nach Anspruch 3, wobei der Verlustfaktor nicht größer als 0,5 ist, wenn sich der Ventilkopf (82) in der geöffneten Stellung befindet.

5.  Tellerventil-Einheit (48) nach einem der Ansprüche 1 bis 4, bei welcher der erste und zweite Kanal (72, 76) im Wesentlichen hindernisfrei sind, wenn sich der Ventilkopf (82) in der geöffneten Stellung befindet.

6.  Tellerventil-Einheit (48) nach einem der vorangehenden Ansprüche, bei der die im Allgemeinen gebogene Verbindungsoberfläche (108) einen im Wesentlichen konstanten Krümmungsradius entlang einer ersten Ebene aufweist.

7.  Tellerventil-Einheit (48) nach einem der vorangehenden Ansprüche mit zusätzlich ein Verbindungselement, das dazu eingerichtet ist, den Ventilkopf (82) innerhalb des Ventilgehäuses (64) zwischen der geöffneten Stellung und der geschlossenen Stellung zu bewegen.

8.  Tellerventil-Einheit (48) nach Anspruch 7, bei der die Verbindungselement-Anordnung um eine erste Achse schwenkbar ist, um den Ventilkopf (82) innerhalb des Ventilgehäuses zu bewegen.

9.  Tellerventil-Einheit (48) nach Anspruch 8, wobei die Verbindungselement-Anordnung während einer ersten Bewegungsspanne des Ventilkopfes (82) um die erste Achse und während einer zweiten Bewegungsspanne des Ventilkopfes (82) um die zweite Achse schwenkbar ist.

10. Tellerventil-Einheit (48) nach einem der vorangehenden Ansprüche, bei der ein Teil des Ventilgehäuses (64) entlang des zweiten Kanals (76) einen Innendurchmesser (126) von ungefähr 6,985 cm (2,75 Inch) aufweist.

11. Verfahren zum Zuführen einer Reinigungsflüssigkeit in das Innenvolumen eines Kessels mit folgenden Schritten:

    Einführen eines Strahlrohrs (14) in das Innenvolumen zum Zuführen der Reinigungsflüssigkeit in das Innenvolumen des Kessels;
    Bereitstellen eines Ventils in Fluidverbindung mit dem Strahlrohr (14) zum Zuführen der Reinigungsflüssigkeit in das Strahlrohr mit einer Reynolds-Zahl größer als 1,5 Millionen; und
    Zuführen der Reinigungsflüssigkeit an das Ventil bei einem ersten Druck, der nicht größer als 1379,31 kPa (200 Pfund pro Quadratinch) ist, so dass die Reinigungsflüssigkeit das Ventil bei einem zweiten Druck, der nicht kleiner als 689,655 kPa (100 Pfund pro Quadratinch) ist, verlässt.

12. Verfahren zum Zuführen der Reinigungsflüssigkeit nach Anspruch 11, bei dem der erste Druck nicht größer als 1103,448 kPa (160 Pfund pro Quadratinch) und der zweite Druck nicht kleiner als 827,586 kPa (120 Pfund pro Quadratinch) ist.

13. Verfahren zum Zuführen der Reinigungsflüssigkeit nach Anspruch 11 oder 12, bei dem das Reinigungsfluid entlang einer ersten Achse fließt, während es in das Ventil eintritt, und entlang einer zweiten Achse, die im Wesentlichen senkrecht zu der ersten Achse ist, fließt, wenn es aus dem Ventil austritt.

**14.** Tellerventil-Einheit nach Anspruch 6, wobei die erste und die zweite Achse (74, 78) in der ersten Ebene liegen.

**15.** Tellerventil-Einheit nach Anspruch 6, wobei der Krümmungsradius im Allgemeinen mit dem Durchmesser des ersten Kanals (72) übereinstimmt.

**16.** Tellerventil-Einheit nach Anspruch 6, wobei die Verbindungsoberfläche eine im Allgemeinen gekrümmte Oberfläche aufweist, die durch einen im Wesentlichen konstanten Krümmungsradius entlang einer zweiten Ebene, die senkrecht zu der ersten Ebene liegt, definiert ist.

**17.** Tellerventil-Einheit nach Anspruch 15, wobei der Ventilkopf (82) im Allgemeinen kugelförmig ist.

**Revendications**

**1.** Soupape champignon (48) pour une utilisation dans un souffleur de suie (10) configuré pour enlever des débris provenant du volume intérieur d'une chaudière, la soupape champignon (48) comprenant :

- un corps de soupape (64) définissant un premier passage (72) s'étendant le long d'un premier axe (74) et un second passage (76) s'étendant le long d'un second axe (78) qui est généralement perpendiculaire au premier axe (74) ; et
- une tête de soupape (82) configurée pour se déplacer généralement transversalement par rapport au corps de soupape (64) entre une position ouverte et une position fermée, la tête de soupape (82) définissant une surface de liaison généralement arquée (108) s'étendant entre les premier et second passages (72,76), de telle façon que la soupape présente un facteur de perte sensiblement inférieur à 6,0 quand la soupape se trouve dans la position ouverte.

**2.** Soupape champignon (48) selon la revendication 1, dans laquelle le facteur de perte est inférieur ou égal à 3,0 quand la tête de soupape (82) se trouve dans la position ouverte.

**3.** Soupape champignon (48) selon la revendication 2, dans laquelle le facteur de perte est inférieur ou égal à 1,5 quand la tête de soupape (82) se trouve dans la position ouverte.

**4.** Soupape champignon (48) selon la revendication 3, dans laquelle le facteur de perte est inférieur ou égal à 0,5 quand la tête de soupape (82) se trouve dans la position ouverte.

**5.** Soupape champignon (48) selon une quelconque des revendications 1 à 4, dans laquelle les premier et second passages (72,76) sont sensiblement dégagés quand la tête de soupape (82) se trouve dans la position ouverte.

**6.** Soupape champignon (48) selon une quelconque revendication précédente, dans laquelle la surface de liaison généralement arquée (108) a un rayon de courbure sensiblement constant le long d'un premier plan.

**7.** Soupape champignon (48) selon une quelconque revendication précédente, comprenant de plus un couplage configuré pour déplacer la tête de soupape (82) dans le corps de soupape (64) entre les positions ouverte et fermée.

**8.** Soupape champignon (48) comme dans la revendication 7, dans laquelle le couplage pivote autour d'un premier axe pour déplacer la tête de soupape (82) à l'intérieur du corps de soupape.

**9.** Soupape champignon (48) comme dans la revendication 8, dans laquelle le couplage pivote autour du premier axe durant une première plage de mouvement de la tête de soupape (82) et pivote autour du second axe durant une seconde plage de mouvement de la tête de soupape (82).

**10.** Soupape champignon (48) selon une quelconque revendication précédente, dans laquelle une partie du corps de soupape (64) le long du second passage (76) présente un diamètre interne (126) généralement égal à 6,985 cm (2,75 pouces).

**11.** Procédé de distribution d'un fluide de nettoyage dans un volume intérieur d'une chaudière, comprenant les étapes de :

introduire un tube de lance (14) dans le volume intérieur pour distribuer le fluide de nettoyage dans le volume intérieur de la chaudière ;

prévoir une soupape en communication fluidique avec le tube de lance (14) pour distribuer le fluide de nettoyage vers celui-ci avec un nombre de Reynolds supérieur à 1,5 million ; et

distribuer le fluide de nettoyage vers la soupape sous une première pression inférieure ou égale à 1 379,31 kPa (200 livres par pouce carré) de telle façon que le fluide de nettoyage quitte la soupape sous une seconde pression supérieure ou égale à 689,655 kPa (100 livres par pouce carré).

**12.** Procédé pour distribuer le fluide de nettoyage selon la revendication 11, dans lequel la première pression est inférieure ou égale à 1 103,448 kPa (160 livres par pouce carré) et la seconde pression est supérieure ou égale à 827,586 kPa (120 livres par pouce carré).

**13.** Procédé pour distribuer le fluide de nettoyage selon la revendication 11 ou 12, dans lequel le fluide de nettoyage entre dans la soupape en s'écoulant le long d'un premier axe et sort de la soupape en s'écoulant le long d'un axe qui est sensiblement perpendiculaire au premier axe.

**14.** Soupape champignon selon la revendication 6, dans laquelle les premier et second axes (74,78) se trouvent dans le premier plan.

**15.** Soupape champignon comme dans la revendication 6, dans laquelle le rayon de courbure est généralement égal au diamètre du premier passage (72).

**16.** Soupape champignon comme dans la revendication 6, dans laquelle la surface de liaison a une surface généralement arquée définie par un rayon de courbure sensiblement constant le long d'un second plan orthogonal au premier plan.

**17.** Soupape champignon comme dans la revendication 15, dans laquelle la tête de soupape (82) est généralement de forme sphérique.

EP 1 760 374 B1

Fig. 1

12

*Fig. 2*

*Fig. 3*

*Fig. 4*

48

82  110

114

108

86  112

*Fig. 5*

48

82

108

111

118

122

73

255
250
260
252
270
248
268
322
246
258
247
261
254
72

*Fig. 6a*

266
262
254 264

*Fig. 6b*

272
260
246
247
276
254

*Fig. 7a*

274
272
260
262

*Fig. 7b*

*Fig. 8a*

*Fig. 8b*

17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0391038 A
- US 60555763 B